**Europäisches Patentamt**

(19) **European Patent Office**

**Office européen des brevets**

(11) Veröffentlichungsnummer: **0 105 159 B1**

# (12) EUROPÄISCHE PATENTSCHRIFT

(45) Veröffentlichungstag der Patentschrift:
**10.12.86**

(21) Anmeldenummer: **83108187.2**

(22) Anmeldetag: **19.08.83**

(51) Int. Cl.⁴: **B 32 B 3/12**, E 04 C 2/20, E 04 C 2/34, B 29 C 47/04

(54) **Stegmehrfachplatte.**

(30) Priorität: **09.09.82 DE 8225408 U**

(43) Veröffentlichungstag der Anmeldung:
**11.04.84 Patentblatt 84/15**

(45) Bekanntmachung des Hinweises auf die Patenterteilung:
**10.12.86 Patentblatt 86/50**

(84) Benannte Vertragsstaaten:
**AT BE CH DE FR GB IT LI NL SE**

(56) Entgegenhaltungen:
**EP - A - 0 054 856**
**DE - U - 7 737 362**

(73) Patentinhaber: **Röhm GmbH, Kirschenallee**
**Postfach 4242, D-6100 Darmstadt 1 (DE)**

(72) Erfinder: **Kaube, Peter, Drosselweg 8,**
**D-6101 Rossdorf 1 (DE)**
Erfinder: **Schanz, Karl-Heinz, Fürthweg 9, D-6109 Mühltal (DE)**
Erfinder: **Vetter, Heinz, Dr.-Ing., Taunusstrasse 92, D-6101 Rossdorf 1 (DE)**
Erfinder: **Müller, Jens, Dr., Im Dürrenkopf 4, D-6103 Griesheim (DE)**

ACTORUM AG

## Beschreibung

Stegmehrfachplatten, die zwischen zwei parallelen, im wesentlichen ebenen Aussenschichten aus PMMA wenigstens eine dazwischen angeordnete Mittelschicht aufweisen und bei denen die Aussen- und Mittelschichten durch Stege einstückig verbunden sind, sind bekannt und im Handel erhältlich. Sie werden durch Extrusion mittels eines dem Querschnitt entsprechenden Werkzeugs durch gleichzeitige Ausbildung der Aussen- und Mittelschichten und der Stege erzeugt. Nach dem Austritt des Hohlstranges aus der Extrusionsdüse werden die Aussenschichten beim Durchlaufen eines Vakuumformkanals unter die Erweichungstemperatur abgekühlt. Die Mittelschichten und Stege bleiben länger thermoplastisch als die Aussenschichten. Da sie nicht gestützt werden, neigen die Mittelschichten bei waagerechter Extrusion zum Durchhängen zwischen den Stegen. Dieser Effekt lässt sich vermindern, wenn die Mittelschichten sehr dünn ausgeführt werden, weil dann weniger Wärme bis zum Unterschreiten der Erweichungstemperatur abzuführen ist, und wenn darüber hinaus sehr langsam extrudiert wird. Bei der Verarbeitung der Stegmehrfachplatten werden sehr dünne Mittelschichten jedoch leicht beschädigt, so dass aus diesem Grund eine Mindestdicke nicht unterschritten werden darf.

Aus dem DE-U 77 37 362 ist es schon bekannt, die Mittelebene einer Stegdreifachplatte aus einem anderen Kunststoffmaterial zu extrudieren als die Aussenschichten und Stege. Dadurch sollten vor allem optische Effekte erzielt werden. Auch aus EP-A 54 856 ist es bei der Extrusion von Stegdoppelplatten bekannt, verschiedene Teilbereiche des Profils jeweils aus verschiedenen Kunststoffen aufzubauen, wobei aber über deren mögliche Unterschiede nichts ausgesagt wird.

Es bestand die Aufgabe, das Problem des Durchhängens oder der Bruchgefahr der Mittelschichten von Stegmehrfachplatten durch eine neue Gestaltung zu lösen. Dies geschieht bei Stegmehrfachplatten der eingangs beschriebenen Art erfindungsgemäss dadurch, dass die Mittelschicht bzw. -schichten aus einem thermoplastischen Kunststoff mit einer gegenüber dem Material der Aussenschichten erhöhten Nullviskosität im Schmelzzustand und/oder mit einer erhöhten Zähigkeit bestehen.

Zweckmässige Ausführungsformen der Erfindung sind in den Figuren 1 und 2 als Querschnitte dargestellt. Figur 3 und Figur 4 stellen Schnitte durch ein Extrusionswerkzeug zur Herstellung der erfindungsgemässen Mehrfachstegplatten dar.

Wenigstens die Aussenschichten (1, 2) bestehen aus PMMA. Darunter wird eine extrudierbare Formmasse auf der Basis von Polymethylmethacrylat oder von Mischpolymerisaten aus mindestens 88 Gew.-% Methylmethacrylat und höchstens 12 Gew.-% Comonomeren, wie anderen Methacrylestern, Acrylestern, Acrylnitril, Styrol u.dergl. verstanden. Die Formbeständigkeit in der Wärme nach DIN 53 463, Verfahren B, der Formmasse soll nicht unter 75 °C liegen. Die Formmasse kann färbende, trübende, schlagzäh machende oder sonstige übliche Zusätze enthalten. In der Regel bestehen die Stege (4) ganz oder überwiegend aus dem gleichen Material wie die Aussenschichten (1, 2). Sie sind vorzugsweise senkrecht zu den Aussenschichten angeordnet, jedoch ist auch eine schräge oder bogenförmige Querschnittsform möglich.

Die Stegmehrfachplatte kann eine oder mehrere Mittelschichten (3) aufweisen. Die Mittelschichten können gewellt, zickzackförmig oder gestuft sein, sind aber vorzugsweise eben und parallel zu den Aussenschichten angeordnet. Die nachfolgenden Ausführungen, die sich auf eine Stegdreifachplatte mit einer Mittelschicht (3) beziehen, gelten sinngemäss auch für Platten mit zwei oder mehr Mittelschichten.

Durch die Ausbildung der Mittelschicht aus einem Kunststoff mit gegenüber dem Material der Aussenschichten erhöhter Zähigkeit wird die Bruchgefahr der Mittelschicht auch dann vermindert, wenn diese sehr dünn ist. Sie kann z.B. 0,03 bis 0,5 mm dick sein. Für die Mittelschicht eignen sich beispielsweise thermoplastische extrudierbare Kunststoffe mit einer Schlagzähigkeit nach DIN 53453 von mindestens 10, vorzugsweise 50 kJ/m$^2$ oder mehr.

Kunststoffe mit einer gegenüber dem Material der Aussenschichten erhöhten Nullviskosität im Schmelzzustand haben die Wirkung, dass die Mittelschicht bei erhöhter Temperatur bzw. zu einem früheren Zeitpunkt während des Abkühlvorganges eine genügende Formsteifigkeit haben. Dadurch wird auch bei höheren Dicken der Zwischenschicht die Gefahr des Durchhängens vermindert. Die Ausbildung eines Durchhanges der Mittelgurte ist ein langsamer Fliessvorgang, bei dem sich die Strukturviskosität der Kunststoffschmelze praktisch nicht bemerkbar macht. Die Tiefe des entstehenden Durchhanges hängt von der Dehnviskosität $\eta_{D,0}$ bei der Dehngeschwindigkeit null ab. In diesem Bereich gilt der von F.T. Trouton (Proc. Roy. Soc. A77, 326 [1906] 92) für Newton'sche Flüssigkeiten gefundene Zusammenhang zwischen der Dehnviskosität $\eta_{D,0}$ und der Scherviskosität $\eta_{S,0}$:

$$\eta_{D,0} = 3\,\eta_{S,0}$$

wobei der Index 0 auf die Scher- bzw. Dehnungsgeschwindigkeit null hinweist. Die Scherviskosität $\eta_S$ lässt sich z.B. mittels eines Kapillarviskosimeters bei verschiedenen Schergeschwindigkeiten messen; vgl. G. Schreyer, Konstruieren mit Kunststoffen, Band (Carl Hauser Verlag) Seiten 578–589. Die Extrapolation auf die Schergeschwindigkeit null ergibt den Wert $\eta_{S,0}$, aus dem sich nach der obigen Gleichung die für die Erfindung massgebliche Nullviskosität $\eta_{D,0}$ errechnen lässt; (oc. cit. S. 586. Für $\eta_{D,0}$ ist auch der Ausdruck «Gleichgewichtsviskosität» bekannt.

Thermoplastische Kunststoffe mit unterschiedlicher Nullviskosität sind im Handel erhältlich. Eine hohe Nullviskosität kann durch bestimmte Strukturmerkmale der Polymermoleküle des Kunststoffmaterials oder durch eine gegenüber dem Material der Aussenschicht erhöhte Erweichungstemperatur verursacht sein.

Es ist besonders bevorzugt, wenn gleichzeitig die Nullviskosität und die Zähigkeit des Materials der Mittelschicht über den entsprechenden Werten für das PMMA-Material der Aussenschichten liegen. Diese Eigenschaften werden von Kunststoffen der Gruppe Polycarbonate, Polysulfone und thermoplastische Polyester erfüllt. Sie haben auch eine ausreichende Verträglichkeit mit PMMA, die eine einstückige Verbindung der unterschiedlichen Werkstoffe gewährleistet. Als besonders geeignet erweisen sich Polycarbonat-Kunststoffe und unter diesen insbesondere das Bisphenol-A-polycarbonat. Es hat eine Vicat-Erweichungstemperatur nach DIN 53460 (Verfahren B) von 145 °C und die Schlagzähigkeit nach DIN 53453 ist grösser als 70 kg/m², d.h. die Normkleinstäbe brechen beim Schlagversuch nicht. Weitere geeignete Polycarbonat-Kunststoffe leiten sich von anderen aromatischen Bisphenolen, wie Methylen-bis-phenol oder Dihydroxydiphenyläther, ab. – Auch fluorhaltige Polymere, wie Polyvinylidenfluorid, Polychlortrifluoräthylen oder Mischpolymerisate von Tetrafluoräthylen und Hexafluorpropylen sind geeignet.

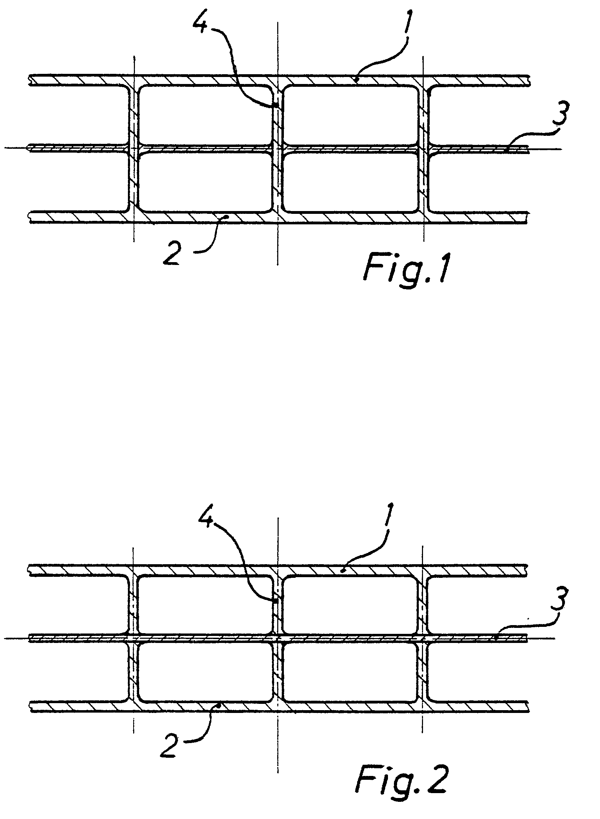

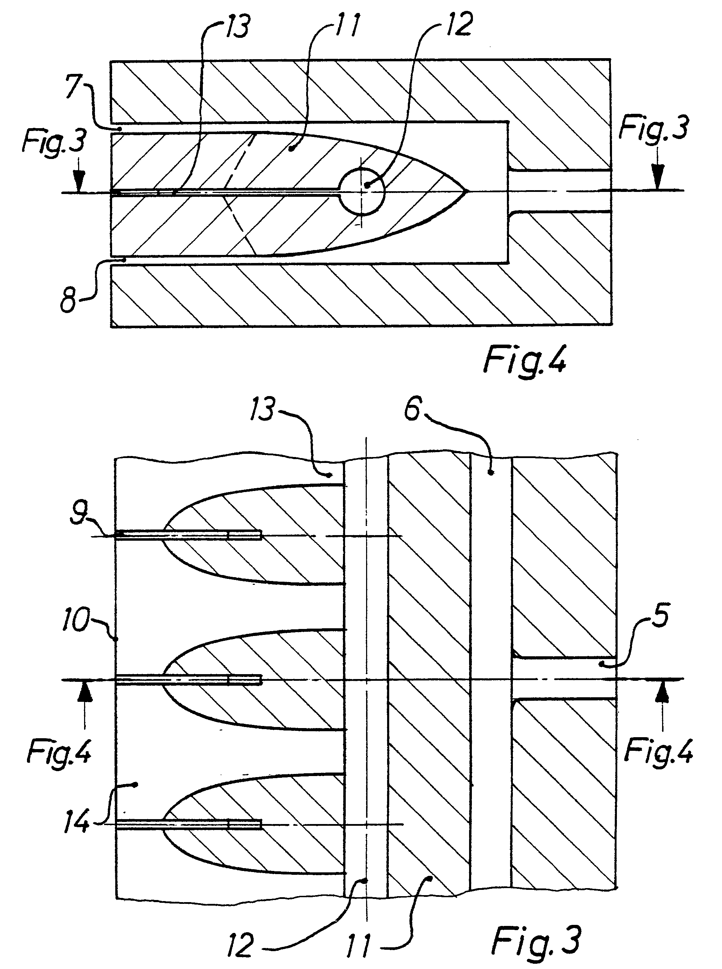

Die neuen Stegmehrfachplatten werden durch gemeinsame Extrusion aller Schichten und Stege erzeugt. Das Extrusionswerkzeug hat zweckmässig den in den Figuren 3 und 4 dargestellten Aufbau. Durch den Massekanal 5 wird aus einem (nicht dargestellten) Extruder aufgeschmolzenes PMMA in den Verteilerkanal 6 gedrückt und fliesst von dort in die die Aussenschichten 1 und 2 formenden Kanäle 7 und 8, sowie in die Schlitze 9 zwischen den Kernstücken 10, wodurch Stege 4 gebildet werden. Die Kernstücke 10 sind auf einem Balken 11 angeordnet, in dem ein Verteilerkanal 12 verläuft. In diesen wird aus einem zweiten Extruder aufgeschmolzener Kunststoff zur Bildung der Mittelschicht 3 eingespeist und durch Kanäle 13 in jedes einzelne Kernstück 10 gedrückt. Die Kanäle 13 erweitern sich fächerförmig 14 in Richtung auf den Düsenmund und nehmen dort die volle Breite der Kernstücke 10 ein, so dass sich die durchtretenden Formmassenströme mit denen in den Schlitzen 9 vereinigen. Bei verhältnismässig geringem Massedruck in den Kanälen 13 bildet sich ein Figur 1 entsprechender Querschnitt aus, bei dem in den Stegen das Material durchläuft. Bei höherem Druck in den Kanälen 13 fliesst die dort austretende Formmasse mit der der benachbarten Kernstücke zusammen und es entsteht ein Hohlstrang entsprechend Figur 2. Bei weiterer Zunahme des Druckes in den Kanälen 13 können auch die Stege 4 teilweise oder ganz aus dem Kunststoff der Mittelschicht 3 gebildet werden. Der Hohlstrang erhält seine endgültige Querschnittsform in dem Vakuumformkanal, der hinter der Extrusionsdüse angeordnet ist.

Während Stegdreifachplatten, die allein aus PMMA aufgebaut sind, nur mit geringer Geschwindigkeit extrudiert werden können, lassen sich die erfindungsgemässen Stegmehrfachplatten wesentlich schneller ohne nennenswerten Durchhang des Mittelgurtes extrudieren.

Stegmehrfachplatten gemäss der Erfindung in den marktgängigen Formaten lassen sich schnell und wirtschaftlich herstellen. Ihre Breite liegt beispielsweise zwischen 500 und 2000 mm, ihre Gesamtdicke zwischen 8 und 50 mm und die Dicke der Stege und Aussenschichten zwischen 0,5 und 2,5 mm. Bevorzugt wird eine im wesentlichen rechtwinklige Querschnittsgeometrie, wie in Figur 1 und 2, wobei die benachbarten Stege 4 und die zwischen ihnen eingeschlossenen Teile der Aussenschichten 1, 2 nahezu ein Quadrat bilden.

Die Stegmehrfachplatten finden als gut wärmeisolierendes Verglasungsmaterial für Wohn- und Industriebauten, Gewächshäuser, Schwimmhallen usw. vielfältige Verwendung.

**Patentansprüche**

1. Stegmehrfachplatte, bestehend aus zwei parallelen, im wesentlichen ebenen Aussenschichten (1, 2) aus einer extrudierbaren Formmasse auf der Basis von Polymethylmethacrylat oder von Mischpolymerisaten aus mindestens 88 Gew.-% Methylmethacrylat und höchstens 12 Gew.-% Comonomeren und wenigstens einer dazwischen angeordneten Mittelschicht (3) aus einem anderen Kunststoffmaterial und Stegen (4), welche die Aussen- und Mittelschichten einstückig verbinden, dadurch gekennzeichnet, dass die Mittelschicht bzw. -schichten aus einem thermoplastischen Kunststoff mit einer gegenüber dem Material der Aussenschichten erhöhten Zähigkeit und/oder erhöhten Nullviskosität (Dehnviskosität bei Schergeschwindigkeit null) im Schmelzzustand bestehen.

2. Stegmehrfachplatte nach Anspruch 1, dadurch gekennzeichnet, dass der thermoplastische Kunststoff der Mittelschicht bzw. -schichten aus der Gruppe der Polycarbonate, Polysulfone und thermoplastischen Polyester ausgewählt ist.

**Revendications**

1. Plaque multiple è nervures d'entretoisement, se composant de deux couches extérieures pratiquement planes et parallèles (1, 2) en une matière à mouler extrudable à base de polyméthacrylate de méthyle ou de copolymères d'au moins 88% en poids de méthacrylate de méthyle et de 12% en poids au maximum de comonomères, et d'au moins une couche moyenne (3) disposée entre elles et faite d'une autre matière plastique, ainsi que de nervures d'entretoisement (4) qui unissent d'un seul tenant les couches extérieures et moyennes, caractérisée en ce que la ou les couches moyennes sont faites d'une matière synthétique thermoplastique ayant, à l'état fondu, une résilience accrue par rapport à la matière des couches extérieures et/ou une viscosité zéro (viscosité d'allongement à la vitesse de cisaillement zéro) accrue.

2. Plaque multiple à nervures d'entretoisement selon la revendication 1, caractérisée en ce que la matière synthétique thermoplastique de la couche ou des couches moyennes est choisie dans le groupe des polycarbonates, des polysulfones et des polyesters thermoplastiques.

## Claims

1. Composite sheet comprising webs, consisting of two parallel, substantially planar outer layers (1, 2) consisting of an extrudable moulding composition based on polymethylmethacrylate or copolymers of at least 88% by weight of methylmethacrylate and at most 12% by weight of comonomers and at least one central layer (3) located therebetween consisting of a different synthetic material and webs (4) which integrally connect the outer and central layers, characterised in that the central layer or layers consist(s) of a thermoplastic synthetic material having a greater toughness and/or greater zero viscosity (elastic viscosity at shear velocity zero) in the molten state than the material of the outer layers.

2. Composite sheet comprising webs as claimed in claim 1, characterised in that the thermoplastic material of the central layer or layers is selected from the group comprising the polycarbonates, polysulphones and thermoplastic polyesters.

Fig.1

Fig.2

Fig.3 — 13  11  12

7

8

**Fig.4**

13   6

9

10

5

Fig.4   Fig.4

12   11   **Fig.3**